# EUROPEAN PATENT SPECIFICATION

(11) **EP 0 553 203 B1**
(45) Date of publication and mention of the grant of the patent: **23.08.1995**
(21) Application number: 91918868.0
(22) Date of filing: 15.10.1991
(51) Int. Cl.: B62D 7/14

(54) **FOURWHEEL STEERING FOR MOTOR VEHICLE**
VIERRADLENKUNG FÜR KRAFTFAHRZEUGE
DIRECTION A QUATRE ROUES POUR VEHICULES A MOTEUR

(30) Priority: 23.10.1990 SE 9003382
(43) Date of publication of application: 04.08.1993
(73) Proprietor: AB VOLVO, 405 08 Göteborg (SE)
(72) Inventor: WENDEBERG, Staffan, S-423 38 Torslanda (SE)
(74) Representative: Hellbom, Lars Olof
(86) International application number: SE9100692
(87) International publication number: WO9206881

(56) References cited:
- EP-A- 0 154 991
- EP-A- 0 308 042
- EP-A- 0 328 002
- US-A- 4 700 960

## Description

The present invention relates to a hydraulic steering mechanism for motor vehicles according to the preamble of claim 1 (known for example from EP-A-0 154 991).

Vehicles with four-wheel steering, i.e. with means for steering the wheels on two parallel wheel axles, have been known for many years. Originally they were primarily directed to steering a rear pair of wheels on a heavy vehicle relative to the front wheels, the rear pair of wheels being steered via a system of rigid linking arms from the steered front wheels. In recent years, however, very advanced hydraulic or electro-hydraulic systems for four-wheel steering have been developed especially for passenger cars. Such an advanced system is shown for example in EP-A-0 154 991. In this case the control system uses the speed of the vehicle to determine whether the rear wheels of the vehicle are to be turned oppositely to or with the front wheels. When driving at low speed the control system activates a servo motor for the rear wheels to turn the rear wheels in the opposite direction to the front wheels. At a certain speed the control system switches over so that thereafter it will turn the rear wheels in the same direction as the front wheels.

The purpose of the present invention is, starting from the known hydraulic system for four-wheel steering, to provide a simple and reliable hydraulic mechanism, especially for trucks, of the type described by way of introduction, which can replace the linkage systems used up to now to thereby make it possible to reduce the effective load-carrying surface of the vehicle and at the same time eliminate demanding assembly work.

This is achieved according to the invention by means of a hydraulic steering mechanism having the characterizing features of claim 1.

A steering mechanism of this type can be designed to be very simple. The proportioning device and the second servo motor can consist of a pair of double-acting hydraulic cylinders, of which the first is a master cylinder, which follows the steering angle of the front wheels, and the other is a slave cylinder, the stroke of which is proportional to that of the first. These can be connected in a separate low pressure circuit separate from the hydraulic circuit in which the servo motor effects the actual steering of the rear wheels. This reduces stresses on the components and increases reliability and useful life.

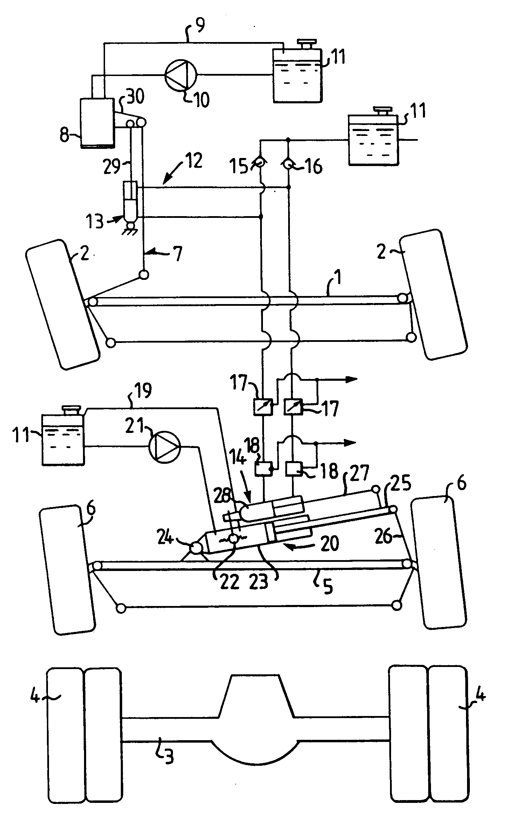

The invention will be described more in detail below with reference to an example shown in the accompanying drawing. The Figure shows schematically a three-axle truck with a simplified coupling scheme of a steering mechanism according to the invention.

In the Figure, 1 designates the front axle of the vehicle with steerable front wheels 2. 3 designates the rear axle with rear wheels 4, and 5 designates an intermediate axle, a so-called "pusher axle" with steerable wheels 6. The front wheels 2 are coupled via a conventional linkage system 7 to a steering gear with a servo motor 8, coupled into a hydraulic circuit 9 with a pump 10 and a tank 11. The front wheel servo circuit is of conventional design and is hydraulically separated from a low pressure circuit (generally designated 12) containing first and second hydraulic piston-cylinder devices 13 and 14, respectively, of which the first forms a master cylinder and the second a slave cylinder. The circuit 14 is connected via check valves 15,16, safety valves 17 and magnetic valves 18 to the tank 11.

A third hydraulic circuit 19 separate from the hydraulic circuits 9 and 12, contains a servo motor in the form of a hydraulic piston-cylinder device 20 and a pump 21 which provides substantially higher pressure in the circuit 19 than the pressure in the circuit 12. A control valve 22 coupled to the pump 21 and the tank 11 regulates the flow to and from the respective cylinder chambers of the hydraulic cylinder 20.

The control valve 22 can be of any known type which is used for steering the piston stroke of a double-acting piston-cylinder device and need not be described in more detail here.

The cylinder 23 of the servo motor 20 is hinged 24 to the intermediate axle 5 while its piston rod 25 is coupled to a steering arm 26 belonging to the steering linkage system of the wheels 6. The piston rod 25 is also joined to the piston rod 27 of the slave cylinder 14 in such a manner that the piston rods 25,27 move synchronously. The cylinder housing 28 of the slave cylinder 14 is limitedly displaceable in the axial direction of the cylinder and is operatively connected in a manner not shown in more detail here to a valve element biased towards a neutral position in the control valve 22.

In the neutral position the connections between the cylinder chambers on either side of the servo motor piston and the pump 21 and tank 11, respectively, are broken.

The piston rod 29 of the master cylinder 13 is joined to the steering arm 30 of the steering gear 8 while its cylinder is axially fixed. The steering mechanism described here thus functions as follows:

A certain movement of the steering arm 30 turns the front wheels 2 of the vehicle and in dependence thereon displaces the piston rod 29 of the master cylinder 13. A volume of a fluid dependent on the piston movement and the cylinder diameter will thus be supplied to one cylinder chamber of the slave cylinder 14, and a corresponding volume will be drained from its other cylinder chamber. Since the servo motor 20 in its initial stage is blocked by the control valve 22, the cylinder housing 28 of the slave cylinder 14 will be displaced axially and this results in the control valve opening so that a pressure medium is supplied via the pump 21 to one cylinder chamber of the servo motor and is drained from its other chamber with resulting turning of the wheels 6 on the intermediate axle 5. As the piston rod 25 of the servo motor 20 begins to move, the slave cylinder 14 is moved towards its neutral position by virtue of the coupling between the piston rods 25 and 27. Thus, the control valve 22 is also returned to its neutral position and the supply of pressure medium to the servo motor 20 is cut off.

The pressure in the low pressure circuit 12 is limited to a certain predetermined maximum pressure by the safety valves 17, which, when the maximum pressure is exceeded, drain the excess fluid to the tank. In a practical embodiment, the pressure can be limited to about 25 bar.

If, for some reason, there should be a fluid shortage in the circuit 12, the check valves 15,16 will then open (since there will be a slight underpressure in the system). This can result in the master and slave cylinders 13 and 14, respectively, getting out of phase with each other. Such an out-of-phase state can be measured with position sensors (not shown) coupled to each cylinder, which sensors control magnetic valves 18 to open them for draining the circuit 12 to the tank on either side of the respective piston. When driving straight ahead, the wheels 6 of the intermediate axle 5 are automatically returned to the straight ahead-position by the self-aligning torque acting on the wheels. As soon as the position sensors sense this position, the magnetic valves are closed.

## Claims

1. Hydraulic steering device for motor vehicles, for steering wheels on a first wheel axle relative to the wheels on a second wheel axle, comprising a pressure-fluid activated servo motor (20) coupled to a steering mechanism (8,30) for the first wheel axle, and which is connected via control valve means (22) to a pressure source, and means for actuating the control valve means dependent on the steering movement of the wheels on the second axle, wherein said means for actuating the control valve means (22) have a hydraulic proportioning device (13) coupled to a steering mechanism (8,30) for steering the wheels (2) on the second axle (1), said proportioning device being disposed to provide a volume of fluid dependent on the turning angle of said wheels to a second servo motor (14), the displacement of which is proportional to the displacement of the proportioning device,one (28) of the elements (27,28) of the second servo motor which are moveable in relation to one another cooperating with the control valve means (22), the element (28) of the second servo motor which cooperates with the control valve means being limitedly displaceable in relation to the control valve means in such a manner that fluid supply to the second servo motor (14) with accompanying activation thereof results in the control valve means opening and activating the first servo motor (20), characterized in that the other (27) of said elements of the second servo motor (14) is limitedly displaceable and is connected to an element (25) for turning the wheels on the first wheel axle and belonging to the first servo motor (20), in such a manner that the first servo motor in its activated state causes the second servo motor (14) to close the control valve.

2. Steering device according to claim 1, characterized in that the proportioning device (13) and the second servo motor (14) are coupled together in a separate second hydraulic circuit (12), separated from said pressure source (21) and the hydraulic circuit (19) of the first servo motor (20), in which second hydraulic circuit there is a lower pressure than in the firstmentioned circuit.

3. Steering device according to claims 1-2, characterized in that the proportioning device (13) is coupled to the steering mechanism (8,30) of the front wheels (2) on a truck and that the first servo motor (20) is coupled to a steering mechanism (26) to an additional steered axle (5) on the vehicle.

## Patentansprüche

1. Hydraulische Lenkvorrichtung für Kraftfahrzeuge zum Lenken der Räder einer ersten Radachse relativ zu den Rädern einer zweiten Radachse, mit einem druckfluidbetätigten Servomotor (20), der mit der Lenkvorrichtung (8, 30) für die erste Radachse verbunden ist und der über ein Ventil (22) mit einer Druckquelle verbunden ist sowie mit einer Vorrichtung zum Betätigen des Steuerventils in Abhängigkeit von der Lenkbewegung der Räder auf der zweiten Achse, wobei die Vorrichtung zur Betätigung des Steuerventils (22) eine Dosiervorrichtung (13) aufweist, die mit der Lenkvorrichtung (8, 30) zum Lenken der Räder (2) der zweiten Radachse (1) verbunden ist, wobei die Dosiervorrichtung so ausgelegt ist, daß sie in Abhängigkeit des Lenkausschlages dieser Räder eine Fluidmenge an einem zweiten Servomotor (17) abgibt, dessen Verschiebung proportional der Verschiebung der Dosiervorrichtung ist, wobei eines (28) der beiden Bauteile (27, 28) des zweiten Servomotors, die relativ zueinander beweglich sind, mit dem Steuerventil (22) zusammenarbeitet und dabei in bezug auf das Steuerventil begrenzt so verschiebbar ist, daß die Fluidzufuhr zum zweiten Servomotor (14) und dessen nachfolgende Aktivierung dazu führen, daß das Steuerventil sich öffnet und den ersten Servomotor (20) aktiviert, dadurch **gekennzeichnet,** daß das andere (27) der beiden Bauteile des zweiten Servomotors (14) begrenzt verschiebbar und so mit einem zum ersten Servomotor (20) gehörenden Teil (25) zum Verschwenken der Räder der ersten Radachse verbunden ist, daß der erste Servomotor in seinem aktivierten Zustand den zweiten Servomotor (14) dazu bringt, das Steuerventil zu schließen.

2. Steuervorrichtung nach Anspruch 1, dadurch gekennzeichnet, daß die Dosiervorrichtung (13) und der zweite Servomotor (14) miteinander in einem zweiten, getrennten Hydraulikschaltkreis (12) miteinander verbunden sind, der von der Druckquelle (21) und dem hydraulischen Schaltkreis (19) des ersten Servomotors getrennt ist, wobei sich im genannten zweiten, hydraulischen Schaltkreis ein Druck befindet, der geringer ist als der im ersterwähnten Schaltkreis.

3. Lenkvorrichtung nach den Ansprüchen 1 bis 2, dadurch gekennzeichnet, daß die Dosiervorrichtung (13) mit der Lenkvorrichtung (8, 30) der Vorderräder (2) eines Lastwagens verbunden ist und daß der erste Servomotor (20) mit einer Lenkvorrichtung (26) an einer zusätzlichen, gelenkten Achse (5) des Fahrzeuges verbunden ist.

## Revendications

1. Dispositif de direction hydraulique pour des véhicules à moteur, destiné à diriger des roues placées sur un premier axe de roues par rapport aux roues placées sur un second axe de roues, comprenant un moteur de commande (20) actionné par pression hydraulique couplé à un mécanisme de direction (8, 30) du premier axe de roues, et qui est relié à une source de pression par l'intermédiaire de moyens (22) formant vanne de commande, et des moyens pour activer les moyens formant vanne de commande en fonction des mouvements de direction des roues du second axe, les moyens destinés à activer les moyens (22) formant vanne de commande possèdant un dispositif (13) hydraulique de proportionalité couplé à un mécanisme de direction (8, 30) destiné à diriger les roues (2) placées sur le second axe (1), ce dispositif de proportionalité étant agence de manière à fournir un volume de liquide fonction de l'angle de braquage des roues à un deuxième moteur de commande (14), dont le déplacement est proportionnel au déplacement du dispositif de proportionalité, l'un (28) des éléments (27, 28) du deuxième moteur de commande qui sont mobiles l'un par rapport à l'autre coopèrant avec les moyens (22) formant vanne de commande, l'élément (28) du deuxième moteur de commande qui coopère avec les moyens formant vanne de commande étant déplaçable de manière limitée en fonction des moyens formant vanne de commande d'une manière telle que l'alimentation en fluide du deuxième moteur (14) de commande en parallèle avec l'activation de celui-ci entraîne l'ouverture des moyens formant vanne de commande et l'activation du premier moteur (20) de commande, caractérisé en ce que l'autre (27) desdits éléments du deuxième moteur (14) de commande est déplaçable de manière limitée et est relié à un élément (25) pour braquer les roues placées sur le premier axe de roues et faisant partie du premier moteur (20) de commande, d'une manière telle que le premier moteur de commande, dans son état activé, entraîne la fermeture de la vanne de commande par le deuxième moteur (14) de commande.

2. Dispositif de direction selon la revendication 1, caractérisé en ce que le dispositif (13) de proportionalité et le deuxième moteur (14) de commande sont reliés l'un à l'autre dans un deuxième circuit hydraulique (12) distinct, séparé de la source de pression (21) et du circuit (19) hydraulique du premier moteur (20) de commande, dans le deuxième circuit hydraulique régnant une pression inférieure audit premier circuit.

3. Dispositif de direction selon les revendications 1 et 2, caractérisé en ce que le dispositif (13) de proportionalité est couplé au mécanisme de direction (8, 30) des roues avant (2) d'un camion et en ce que le premier moteur (20) de commande est relié au mécanisme (26) de direction d'un axe (5) supplémentaire dirigé d'un véhicule.
